# EUROPEAN PATENT APPLICATION

(11) **EP 2 007 163 A2**
(43) Date of publication of application: **24.12.2008**
(21) Application number: 07720581.3
(22) Date of filing: 28.03.2007
(51) Int. Cl.: H04Q 7/38

(54) **TRANSMITTING METHOD FOR MEASUREMENT REPORT AND INFORMATION COLLECTING METHOD AND APPARATUS**

(30) Priority: 30.03.2006 CN 200610066238; 01.06.2006 CN 200610083264
(71) Applicant: Huawei Technologies Co., Ltd., Longgang District, Shenzhen, Guangdong 518129 (CN)
(72) Inventor: QIU, Yong, Shenzhen, Guangdong 518129 (CN); XIE, Mingjiang, Shenzhen, Guangdong 518129 (CN); WANG, Zongjie, Shenzhen, Guangdong 518129 (CN)
(74) Representative: Hengelhaupt, Jürgen
(86) International application number: PCT/CN2007/001007
(87) International publication number: WO 2007/112668

(57) **Abstract**

A method for sending measurement reports, a method for collecting information and the corresponding apparatuses. The method for sending measurement reports includes: if at least one ICR collector exists, sending, by an ICR reporter, an ICR information measurement report message to the ICR collector, the ICR information measurement report message including information about the load of the measured cell, information about the interference of the cell, frequency information or carrier information, ICR reporter ID, and time of collecting ICR information. The method for collecting ICR information includes: after a Base station is started or a cell is set up or reestablished, obtaining the ICR information of the ICR control node correlated to the started Base station or established cell.

## Description

This application claims the priority from the Chinese Patent Application No. 200610066238.X, filed with the Chinese Patent Office on March 30, 2006, entitled "METHOD FOR SENDING MEASUREMENT REPORT IN AN EVOLVED MOBILE COMMUNICATION NETWORK", and the Chinese Patent Application No. 200610083264.3, filed with the Chinese Patent Office on June 1, 2006, entitled "METHOD AND SYSTEM FOR SENDING MEASUREMENT REPORT IN AN EVOLVED MOBILE COMMUNICATION NETWORK", contents of both of which are incorporated herein by reference in their entireties.

### FIELD OF THE INVENTION

The present invention relates to an evolving mobile network, and in particular, to a method for sending Inter-Cell Radio Resource Management (ICR) information measurement reports and a method for collecting ICR information in an evolving mobile network, and the corresponding apparatus.

### BACKGROUND

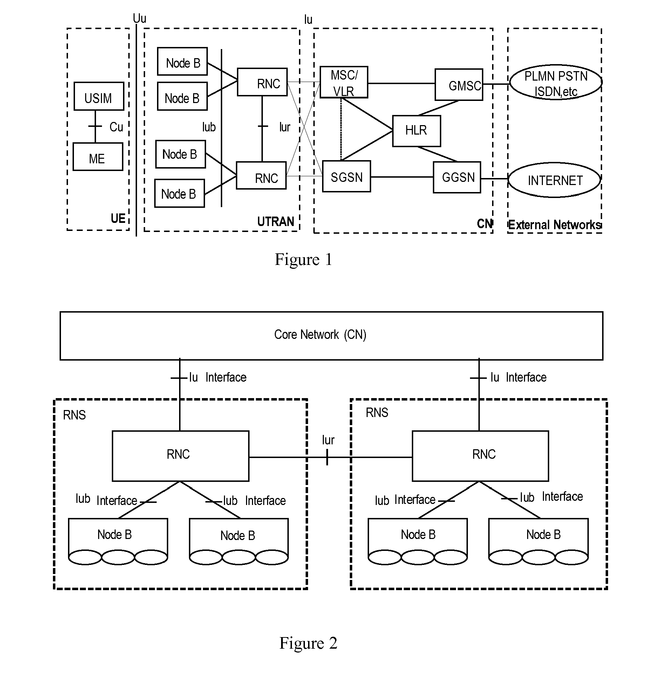

A Universal Mobile Telecommunications System (UMTS) is a third-generation (3G) mobile communication system based on the Wideband Code Division Multiple Access (WCDMA) air interface technology. Generally, a UMTS is also called a WCDMA communication system. A UMTS has a structure similar to that of a second-generation (2G) mobile communication system, and includes a Radio Access Network (RAN) and a Core Network (CN). The RAN is designed to handle radio-related functions; and the CN is designed to handle all voice calls and data connections in the UMTS and implement switching and routing with an external network. A CN is logically divided into a Circuit Switched (CS) domain and a Packet Switched (PS) domain. Figure 1 shows the architecture of a UMTS. As shown in Figure 1, a UMTS Territorial Radio Access Network (UTRAN), a CN and a User Equipment (UE) constitute a whole UMTS.

The UTRAN includes one or more Radio Network Subsystems (RNSs). Figure 2 shows the architecture of a UTRAN network. As shown in Figure 2, an RNS consists of a Radio Network Controller (RNC) and one or more base stations (Node Bs). An RNC is connected with a CN through an Iu interface; a Node B is connected with an RNC through an Iub interface; inside a UTRAN, different RNCs are connected through an Iur interface. An Iur connection refers to a direct physical connection between RNCs or a connection formed through a transport network.

An RNC is designed to control radio resources of a UTRAN, specifically set up and release a connection, switch between connections, combine macro diversity, and manage radio resources. As a Node B of a WCDMA system, the Node B consists of a radio transceiver and a baseband processing component, and is designed for spectrum spreading, modulation, channel encoding, dispreading, demodulation, channel decoding, and conversion between a baseband signal and a Radio Frequency (RF) signal. A Node B is connected with an RNC through a standard Iub interface, and implements physical-layer protocol processing of a Uu interface.

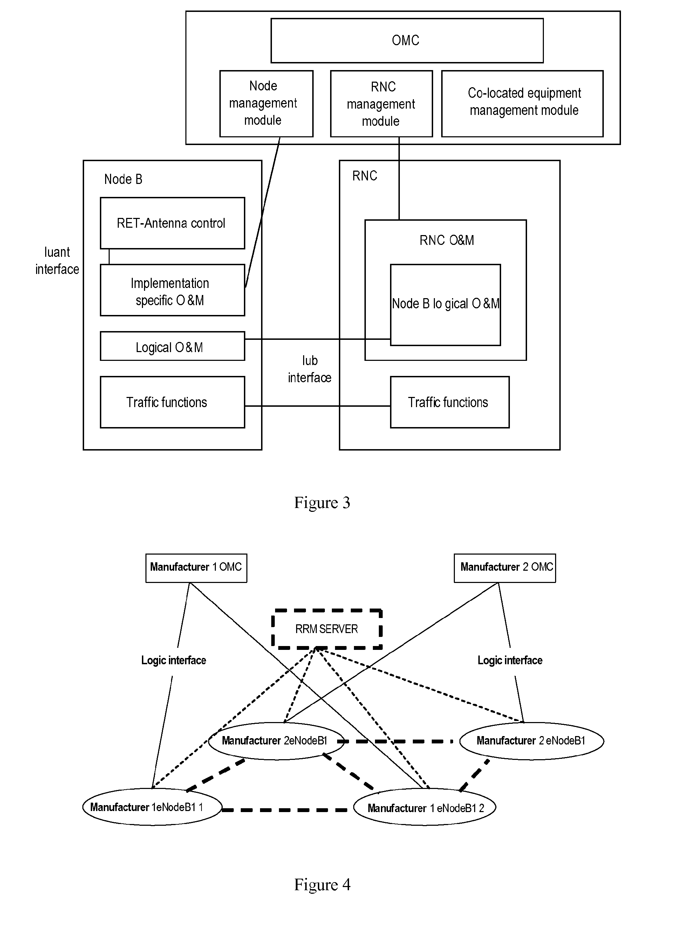

Figure 3 shows the architecture of an RNS with an Operation and Maintenance (O&M) interface in the prior art. As shown in Figure 3, the part directly related to the O&M implementation on a Node B is named "implementation-specific O&M"; the remaining part is related to a group of signaling which is controlled by the RNC, and is named "logic O&M", with the Node B implementing radio resource management.

An implementation-specific O&M is directly connected with the Node B management module of an Operation and Maintenance Center (OMC) to implement the relevant functions.

The essence of a logical O&M is radio configuration function implemented through a group of signaling which is related to control of logic resources. The signaling resources are controlled by an RNC, and include channels and cells. However, the signaling is physically implemented by the Node B. The O&M program on the Node B affects the logic resources controlled by the RNC. Therefore, the Node B needs to interact with the RNC about the resource information through an Iub interface. In the current practice, the logical O&M is part of the NBAP protocol signaling in the UMTS.

Currently, in the industry, a brand-new evolving network architecture is researched for meeting the mobile network application requirements in the coming ten years or longer time, including System Architecture Evolution (SAE) and access network Long-Term Evolution (LTE). The objective of network evolution is to provide an all-IP-based network characterized by low delay, high data rate, high system capacity and coverage, and cost effectiveness. To realize the brand-new network architecture, all nodes, functions and processes of the existing architecture will change substantially.

A sub-function, namely, an ICR, is added into the Radio Resource Management (RRM) in an evolving mobile network.

The inter-Cell RRM information generally includes cell load information, cell interference information, frequency or carrier, and is briefly known as "ICR information". However, the ICR information is not limited to the aforementioned information, and all information that is effective on the ICR control function can be called "ICR information".

Currently, the LTE raises new requirements on the RRM information, ICR information and logical O&M, for example, the need of considering implementation of the logical O&M in the case of RRM centralized control.

An ICR is required due to power interference and cell load imbalance. An ICR may be part of a logical O&M. Moreover, a dynamic ICR is also required due to mobility of the user and change of the data rate. An ICR covers not only inter-cell interference management and inter-cell load balance management, but also inter-cell switching.

For a UMTS R99-Rel-g, the OMC provides resource and parameter information to the RNC, and the RNC sends the information to the Node B. Resource and parameter information includes cell setup parameters and system messages. Such global radio configuration allows the operator to provide global strategies or apply more real-time RRM algorithms policies to control the cell capacity and coverage, and adjust the network to meet the network traffic requirements.

In a UMTS, the RRM information provider (a Node B or a cell) reports the corresponding RNC by default. For an evolving mobile network, the ICR information related to a cell probably needs to be reported to multiple ICR collectors, for example, one or more RRM servers, multiple adjacent evolving Node Bs (eNodeB), or other stand-alone nodes with the logical O&M function. The processes and signaling in the existing UMTS are generally deficient for meeting requirements.

Meanwhile, in an evolving mobile communication system, a Node B may govern one or more cells.

Generally, all the cells have the same frequency and bandwidth. The carrier frequency resources of a cell may be categorized into central frequency used at the cell center and edge frequency used at the cell edge, according to the purpose of the frequency. Such frequencies are generally divided into multiple subcarriers. For example, a 5M bandwidth of a carrier cell can be subdivided into subcarriers at the bandwidth of 15 KHz. The resources allocated through a resource allocator are generally measured in subcarriers.

Adjacent cells may have the same subcarrier. Therefore, when the same subcarrier of adjacent cells is used at the central area of each adjacent cell, no interference is caused between cells. However, when the same subcarrier is used at the edge of the adjacent cell, interference will be caused between the cells that use the same edge frequency. Therefore, when allocating an edge frequency, each cell needs to know the state of utilizing the frequency of the adjacent cell. The extent of detail of the utilization state depends on the specific algorithm. Therefore, there is a need to provide a method avoid repetitive allocation of resources and interference at the cell edge, and collect accurate ICR information.

### SUMMARY

Embodiments of the present invention provide a method for sending measurement reports and a method for collecting information and a corresponding apparatus. If at least one ICR collector exists in an evolving mobile network, an ICR reporter can report the ICR information to the ICR collector; and enable accurate collection of the ICR information.

The objectives of the present invention are achieved through a method for collecting ICR information provided in an embodiment of the present invention. The method includes:

obtaining the ICR information of an ICR control node correlated to a base station or a cell, after the base station is started or the cell is set up or reestablished.

A first apparatus for collecting ICR information of the evolving mobile network provided in an embodiment of the present invention includes:
an ICR information requesting module, configured to request the ICR information of a relevant apparatus from the relevant apparatus after the first apparatus is started, set up or reestablished, and before service is initiated.

A second apparatus for collecting ICR information of the evolving mobile network provided in an embodiment of the present invention includes:
an ICR information reporting module, configured to report the ICR information of the second apparatus after receiving an ICR information request.

A third apparatus for collecting ICR information of the evolving mobile network provided in an embodiment of the present invention includes:
a detecting module, configured to detect a state of a relevant surrounding apparatus; and
an ICR information reporting module, configured to report the ICR information of the third apparatus to the relevant surrounding apparatus after the detecting module detects the relevant surrounding apparatus is started, setup or reestablished.

In the case that at least one ICR collector exists, a method for sending ICR information measurement reports in an evolving mobile network provided in an embodiment of the present invention includes:
sending, by an ICR initiator, an ICR information measurement initiation request message to an ICR reporter; and
triggering the ICR reporter to send an ICR information measurement report message to an ICR collector after receiving the ICR information measurement initiation request message.

The embodiments of the present invention bring the following benefits: in an evolving mobile network, an embodiment of the present invention enables mutual communication between the ICR initiator, the ICR reporter, the ICR collector and the ICR controller. In the case that at least one ICR collector exists, the ICR information is reported to multiple ICR collectors concurrently, thus accomplishing measurement and reporting of ICR information in an evolving mobile network.

After obtaining the information about the relevant/adjacent Node B/cell, a Node B/cell knows how to use the resources. Especially when allocating subcarriers, the present invention prevents a Node B/cell from using the subcarrier, which is already used by another cell at the cell edge, at its own cell edge. This ensures difference of subcarriers used by adjacent cells at the cell edge, and avoids interference.

A Node B/cell obtains the handover algorithm parameters of other Node B/cell through the ICR information collection method, thus implementing the coordination between Node Bs/cells of different manufacturers with different handover parameter settings.

### BRIEF DESCRIPTION OF THE DRAWINGS

Figure 1 shows an architecture of a UMTS;

Figure 2 shows an architecture of a UTRAN network;

Figure 3 shows an architecture of an RNS with an O&M interface in the prior art;

Figure 4 shows an connection between an OMC and an eNodeB in an evolving mobile network;

Figure 5 is a flowchart of ICR information measurement initiation in an embodiment of the present invention;

Figure 6 is a flowchart of ICR information measurement reporting in an embodiment of the present invention;

Figure 7 is a flowchart of ICR information measurement termination in an embodiment of the present invention;

Figure 8 is a flowchart of ICR information measurement failure in an embodiment of the present invention;

Figure 9 is a flowchart of an embodiment of the present invention;

Figure 10 is a first flowchart of ICR information collection in an embodiment of the present invention;

Figure 11 is a second flowchart of ICR information collection in an embodiment of the present invention; and

Figure 12 is a third flowchart of ICR information collection in an embodiment of the present invention.

### DETAILED DESCRIPTION

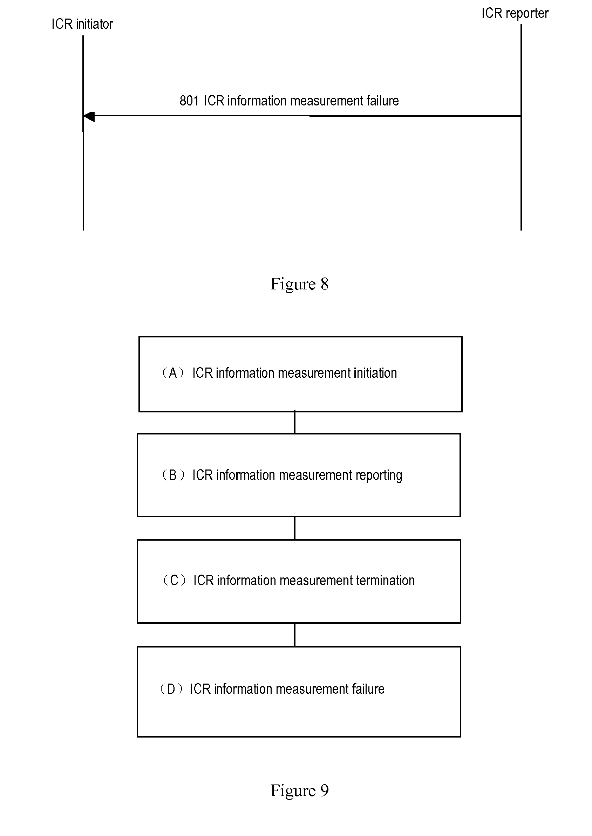

As shown in Figure 9, a method for sending ICR information measurement reports in an evolving mobile network provided in an embodiment of the present invention includes the following processes:
(A) ICR information measurement initiation;
(B) ICR information measurement reporting;
(C) ICR information measurement termination; and
(D) ICR information measurement failure.

The above processes are developed on the basis of some or all of the ICR initiator, the ICR reporter, the ICR collector and the ICR controller. The concepts and relationships therebetween are introduced hereinafter.

The concepts of ICR initiator, ICR reporter, ICR collector and ICR controller are put forward in an evolving mobile network. They become function entities in the evolving mobile network.

An evolving mobile system is based on the OFDMA technology, thus providing a technical foundation for dynamic adjustment of carrier or subcarrier resources in a cell. For example, a cell can lease or borrow resources from a surrounding cell according to the load of the surrounding adjacent cell; or, a cell can adjust the antenna angle according to the interference on the surrounding adjacent cell. The specific function for handling such issues is called "ICR control function", which includes cell load management and cell interference management. The function entity with such a control capability is called "ICR controller". AN ICR initiator, as its name implies, is a function entity capable of initiating ICR information collection; an ICR reporter is a function entity or node that provides ICR information; and an ICR collector is a function entity or node that saves ICR information.

The relationships between an ICR initiator, an ICR reporter, an ICR collector and an ICR controller vary with other function entities in the evolving mobile network, as detailed hereinafter.

Figure 4 shows the connection between an OMC and an eNodeB in an evolving mobile network. As shown in Figure 4, in an evolving mobile network, an RRM server is an optional function entity, and is illustrated by dotted lines in Figure 4. Depending on whether an RRM server exists in an evolving mobile network and according to the functions to be executed when an RRM server exists, the ICR initiator, the ICR reporter, the ICR collector and the ICR controllers have the following relationships:
(1) If no RRM server exists in the evolving mobile network:
   For an ICR controller, there are three ICR modes:
      (1.1) Centralized ICR: The ICR controllers are centralized on a stand-alone node. The stand-alone node can be placed in the locations of eNodeB, RRM server or other location in the network to execute the ICR control function in a centralized way, manage load between cells and manage interference between cells. Other eNodeB or cells are managed objects;
      (1.2) Distributed ICR: The ICR controllers are distributed on all eNodeBs, and each eNodeB has the ICR control function. The eNodeB can manage, or be managed by, the surrounding eNodeBs with ICR relationship with the eNodeB, to manage load and interference between cells;
      (1.3) Centralized and distributed ICR: The ICR controllers exist on a stand-alone node and eNodeBs concurrently. Namely, some function entities related to ICR information in an evolving mobile network are controlled by the stand-alone node, and some eNodeBs control their own functions related to ICR information;
         an ICR initiator may be an eNodeB, stand-alone node, or OMC;
         an ICR reporter may be an eNodeB or cell;
         ICR collectors may be distributed on all eNodeBs, or aggregated on a stand-alone node where the ICR controller is located, or concurrently exist on the eNodeBs and the stand-alone node where the ICR controller is located;
(2) If an RRM server exists in the evolving mobile network, and the RRM server is only a database for storing ICR information:
   For an ICR controller, there are three ICR modes:
      (2.1) Centralized ICR: The ICR controllers are centralized on a stand-alone node. The stand-alone node can be placed in the locations of eNodeB, RRM server or other location in the network to execute the ICR control function in a centralized way, manage load between cells and manage interference between cells. Other eNodeB or cells are managed objects;
      (2.2) Distributed ICR: The ICR controllers are distributed on all eNodeBs, and each eNodeB has the ICR control function. The eNodeB can manage, or be managed by, the surrounding eNodeBs with ICR relationship with the eNodeB, to manage load and interference between cells; and
      (2.3) Centralized and distributed ICR: The ICR controllers exist on a stand-alone node and eNodeBs concurrently. Namely, some function entities related to ICR information in an evolving mobile network are controlled by the stand-alone node, and some eNodeBs control their own functions related to ICR information;
         an ICR initiator may be an eNodeB, RRM server, or OMC;
         an ICR reporter may be an eNodeB or a cell; or, if the ICR initiator is not an RRM server, the ICR reporter may be an RRM server;
         an ICR collector is an RRM server, or, the eNodeB may serve the function of storing;
(3) If an RRM server exists in the evolving mobile network and the RRM server is a database for storing ICR information and capable of the ICR control function:
   an ICR function control is an RRM server, or some eNodeBs serve as function controllers and the ICR control functions related to the eNodeB are executed by the eNodeB;
   an ICR initiator may be an eNodeB, RRM server, or OMC;
   an ICR reporter may be an eNodeB or a cell; or, if the ICR initiator is not an RRM server, the ICR reporter may be an RRM server;
   an ICR collector is an RRM server, or an eNodeB.

In view of the above introduction to ICR controller, for both distributed and centralized ICRs, some eNodeBs may not function as an ICR controller. In this case, such eNodeBs are only managed objects in the ICR function control, and they are managed by other node or eNodeB in the role of ICR controller, and participate in the functions such as inter-cell interference management and inter-cell load management.

Now that the concepts of ICR initiator, ICR reporter, ICR collector and ICR controller are clarified and the function entities are determined, the method under the present invention is further described below with respect to the processes designed in the present invention.

The processes designed in the present invention firstly include the process of (A) ICR information measurement initiation.

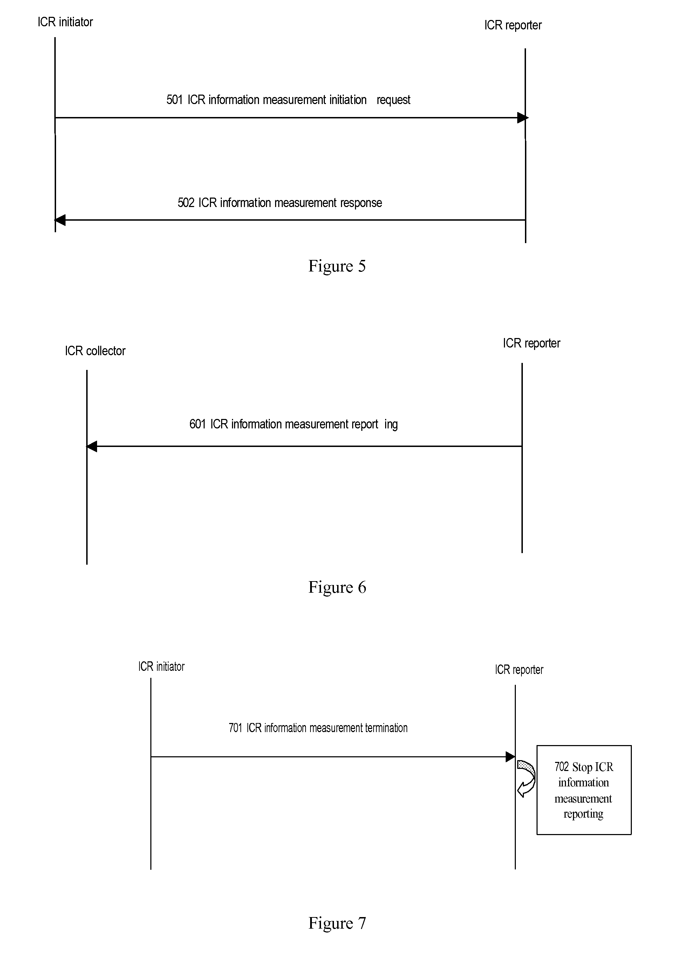

This process enables an ICR initiator to send an ICR information measurement request to an ICR reporter, and trigger the ICR information measurement reporting process. As shown in Figure 5, the ICR information measurement initiation process includes the following steps:
Step (501): The ICR initiator sends an ICR information measurement initiation request to the ICR reporter.
Step (502): After receiving the ICR information measurement initiation request, the ICR reporter executes measurement according to the parameters in the request message or provides ICR information directly, and returns an ICR information measurement response message to the ICR initiator.

An ICR information measurement initiation request includes a report characteristics message unit and an ICR information message unit, wherein the report characteristics message unit is designed to indicate how to perform and report measurement:
if the "report characteristics" parameter is set to "on demand", the ICR reporter reports measurement information promptly and initiates the ICR information measurement reporting process unless otherwise specified;
if the "report characteristics" parameter is set to "periodic", the ICR reporter reports measurement information according to the set period and frequency and initiates the ICR information measurement reporting process unless otherwise specified;
if the "report characteristics" parameter is set to "by event", the ICR reporter judges whether the event occurs; if the event occurs, the ICR reporter initiates the ICR information measurement reporting process unless otherwise specified;
The event may indicate the following circumstances:
if the event is "up threshold mode" (exceeding a threshold), the ICR reporter judge whether the parameter to be measured (namely, cell load information or cell interference information) exceeds the threshold; and decides whether to initiate an ICR information measurement reporting process after a certain delay unless otherwise specified;
if the event is "below threshold mode" (lower than a threshold), the ICR reporter judges whether the parameter to be measured is lower than the threshold; and decides whether to initiate an ICR information measurement reporting process after a certain delay unless otherwise specified;
if the event is "increase amount threshold mode" (the increase amount exceeds a threshold in a certain time), the ICR reporter judges whether the parameter to be measured increases by an amount greater than the threshold in a certain time segment; if so, the ICR reporter decides whether to initiate an ICR information measurement reporting process after a certain delay unless otherwise specified;
if the event is "decrease amount threshold mode" (the decrease amount exceeds a threshold in a certain time), the ICR reporter judges whether the parameter to be measured decreases by an amount greater than the threshold in a certain time segment; if so, the ICR reporter decides whether to initiate an ICR information measurement reporting process after a certain delay unless otherwise specified.

An ICR information message unit includes:
an ICR collector ID message unit, which is a message unit or a group of message units. The contents of the message unit include an ICR collector ID. The ICR collector ID may be only an ID such as integer numbers or other value to identity of the ICR collector. The ICR collector ID helps the ICR reporter set up a relationship with the ICR collector and find the ICR collector. The ICR collector ID may also be information in the format of an IP address or other address;
an ICR initiator ID message unit, which contains the identifier of the ICR initiator and indicates who initiates the ICR information collection;
an ICR controller ID message unit, which contains the identifier of the ICR controller and indicates who executes the ICR control function;
an ICR reporter ID message unit, which contains the identifier of the ICR reporter and indicates who provides the ICR information; and
an ICR test item message unit, which contains the information about the load or interference of the cell, and indicates who actually executes and provides the ICR information measurement and which ICR information should be measured and reported.

Table 1 gives an embodiment of an ICR information measurement initiation request; and Table 2 gives an embodiment of the "report characteristics" message unit in the ICR information measurement initiation request.

**Table 1**

| **IE/Group Name** | **Presence** | **Range** | **IE Type and Reference** | **Semantics Description** | **Criticality** | **Assigned Criticality** |
|---|---|---|---|---|---|---|
| Message Discriminator | M | | | | - | |
| Message Type | M | | | | YES | Reject |
| Transaction ID | M | | | | - | |
| | M | | | | | |
| **Report** | M | | | Report | | |
| **Characteristics** | | | | characteristics | | |
| | | | | | | |
| | | | | | | |
| **ICR information** | | | | ICR information | | |
| > ICR Collector ID | | | | ICR collector ID | | |
| > ICR initiator ID | | | | ICR initiator ID | | |
| > ICR reporter ID | | | | ICR reporter ID | | |
| > ICR Controller ID | | | | ICR controller ID | | |
| > ICR test item | | | | ICR test item | | |
| > Cell Load information | | | | | | |
| > Cell interference information | | | | | | |

**Table 2**

| **IE/Group Name** | **Presence** | **Range** | **IE Type and Reference** | **Semantics Description** | **Criticality** | **Assigned Criticality** |
|---|---|---|---|---|---|---|
| CHOICE *Deport Characteristics* | | | | | - | |
| >*On Demand* | | | | "On demand" mode | - | |
| >*periodic* | | | | "Periodic" mode | - | |
| >*Event* | | | | "Event" mode | - | |
| >> up threshold mode | | | | | | |
| >>> *threshold value* | | | | | | |
| *Etc..* | | | | | | |
| >> below threshold mode | | | | | - | |
| >>increase amount threshold mode | | | | | - | |
| >>decrease amount threshold mod | | | | | - | |
| | | | | | - | |

The processes designed in the present invention secondly include the process of (B) ICR information measurement reporting.

This process enables an ICR reporter to report the ICR measurement information to an ICR collector. As shown in Figure 6, the ICR information measurement reporting process includes the following steps:
Step (601): The ICR reporter sends an ICR information measurement report message to the ICR collector.
According to the triggering mode in the process (A), once the conditions of the set triggering mode are fulfilled, the ICR reporter initiates an ICR information measurement reporting process to report the measured ICR information to the ICR information collector. As described above, the ICR information collector may be more than one network function entity.

The ICR information measurement reporting message includes: ICR information such as load of the cell, interference of the cell, frequency or carrier; ICR reporter ID; and time of collecting ICR information.

As shown in Table 3, the ICR information (such as load of the cell, interference of the cell, frequency or carrier) includes but is not limited to:
1) physical-layer information in the measurement period, including: subcarrier information such as average power, average bit rate and channel utilization ratio (timeslot number) of each subcarrier, and the seldom used subcarriers (sorted by average power, average bit rate and channel utilization ratio) in a time period;
2) subcarriers most frequently used by a UE, and the average power, average bit rate and location (edge or center) of such subcarriers, traffic, statistics-based Signal to Interference Ratio (SIR), and statistics-based Bit Error Ratio (BER);
3) total power of Node B;
   if soft frequency multiplexing is applied, the measurement items may further include:
   total power of edge area, total power of central area, total transmission bit rate, total bit rate of edge area, total bit rate of central area, channel utilization ratio, channel utilization ratio of edge area, and channel utilization ratio of central area;
4) transport channel layer (MAC)
   average power, average bit rate, and channel utilization ratio of common channels such as RACH and FACH.

**Table 3**

| **IE/Group Name** | **Presence** | **Range** | **IE Type and Reference** | **Semantics Description** | **Criticality** | **Assigned Criticality** |
|---|---|---|---|---|---|---|
| Message Discriminator | M | | | | - | |
| Message Type | M | | | | YES | reject |
| Transaction ID | M | | | | - | |
| Measurement ID | M | | | | YES | ignore |
| | | | | | | |
| **ICR information** | M | | | | | |
| > **Cell Load information** | M | | | Cell load information | | |
| > >sub carrier informat ion | | | | Subcarrier information | | |
| | | | | | | |
| > >max.Down link power | M | | | Total power of Node B | | |
| > >> Central area down link power | O | | | If soft frequency multiplexing is applied, the measuremen t items include total power of central area | | |
| > >> edge area down link power | O | | | If soft frequency multiplexing is applied, the measuremen t items include total power of | | |
| | | | | edge area | | |
| | | | | | | |
| | | | | | | |
| >**Cell interference information** | M | | | Cell interference information | | |
| >>SIR | | | | Statistics-ba sed Signal-to-Int erference Ratio (SIR) | | |
| | | | | | | |
| >>BER | | | | Statistics-ba sed Bit Error Rate (BER) | | |
| | | | | | | |
| >**ICR collection stamp** | | | | Time of collecting ICR information | | |
| >**ICR collector ID** | | | | ICR collector | | |
| >**ICR reporter ID** | | | | ICR reporter | | |
| >**ICR initiator ID** | | | | ICR initiator | | |
| **ICR controller ID** | | | | ICR controller | | |

The processes designed in the present invention thirdly include the process of (C) ICR information measurement termination.

This process enables an ICR initiator to terminate the ICR information measurement initiation process. In this process, the ICR reporter stops the measurement reporting of the measurement request. As shown in Figure 7, the ICR information measurement termination process includes the following steps:
Step (701): The ICR initiator sends an ICR information measurement termination request to the ICR reporter.
Step (702): The ICR reporter stops reporting ICR information measurement after receiving the ICR information measurement termination message.

The processes designed in the present invention further include the process of (D) ICR information measurement failure.

In the ICR information measurement failure process, the ICR reporter informs the ICR initiator that the ICR information requested in the ICR information measurement initiation process will not be reported any longer. As shown in Figure 8, this process includes the following steps:
Step (801): The ICR reporter sends an ICR information measurement failure message to the ICR initiator to stop reporting the ICR information measurement.

In the evolving mobile network, the processes and the steps thereof may be independent or used together with the common measurement process in the existing 3GPP TS25.433 protocol. The process under the present invention may combine with the existing process after adding or modifying the relevant message units in the common measurement process, so as to develop an evolving common measurement process to fulfill the objectives of the present invention. Moreover, the process under the present invention may also combine with the information exchange process in the 3GPP TS25.433 process after adding or modifying the relevant message units in the information exchange process, so as to develop an evolving information exchange process to fulfill the objectives of the present invention.

Besides, the present invention allows the data operation & maintenance or data configuration of the OMC to trigger the process of reporting the ICR information from an ICR reporter. The data operation & maintenance and data configuration of the OMC include settings of event triggering, for example, triggering the ICR reporter to report ICR information actively after overload conditions are met; and periodic reporting of ICR information from an ICR reporter actively.

The event triggering is set through a threshold of ICR information. The threshold is set through an OMC, and executed by an eNodeB. Thresholds include load threshold or interference threshold. Load is generally measured by the total transmitted power of the eNodeBs; and interference is measured by transmission BER or SIR, but the measurement is not limited to the parameters. The eNodeB may perform an overall judgment on the general load and interference of the cell under control. Once the threshold is exceeded, the ICR reporter reports to the corresponding ICR collector. Moreover, a switch exists on the OMC for deciding whether to start or stop active reporting of ICR information from the ICR reporter.

The settings required for an ICR reporter to report ICR information actively at regular intervals include: the ICR reporter reports ICR information actively to the ICR collector periodically; after receiving the ICR information for the first time, the ICR collector returns a response about receiving of ICR information; after receiving ICR information subsequently, the ICR collector returns responses about receiving of ICR information at regular intervals; or, if no ICR information is received within a specified time segment, the ICR collector returns a response about no receiving of ICR information to the ICR reporter actively.

If the ICR information measurement initiation process is not applied but the ICR reporter reports the ICR information actively, the report recipient (namely, ICR information collector) is generally the eNodeB/cell adjacent to the ICR reporter (eNodeB/cell), and the reported ICR information may include load information, or interference information, or combination thereof.

The ICR information measurement reporting process and ICR information measurement failure process after the ICR reporter reports ICR information as triggered by the data operation & maintenance or data configuration of the OMC are the same as the equivalent processes of the preceding embodiment mentioned above, and are not repeated any further. Since the process is about starting or stopping active reporting of ICR information from an ICR reporter under control of an OMC, the ICR information measurement termination process is omitted in the process. The general processes are:
(A1) process of an ICR reporter reporting ICR information triggered by data operation & maintenance or data configuration of the OMC;
(B) ICR information measurement reporting process;
(C1) process of starting or stopping active reporting from an ICR reporter under control of an OMC; and
(D) ICR information measurement failure process.

A method for collecting ICR information provided in an embodiment of the present invention includes: after a Node B is started or a cell is set up or reestablished, obtaining the ICR information of the ICR control node correlated to the Node B or cell.

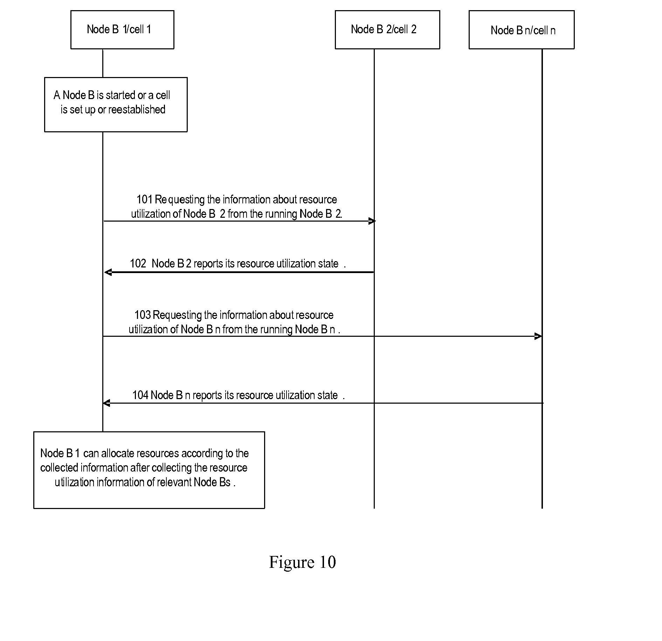

As shown in Figure 10, a specific collection process includes the following steps:
Step (101): Node B 1 requests the information about resource utilization of Node B 2 from the Node B 2 which is running.
Step (102): Node B 2 reports its resource utilization state.
Step (103): Node B 1 requests the information about resource utilization of Node B n from the Node B n which is running.
Step (104): Node B n reports its resource utilization state.

Namely, after a Node B is started or a cell governed by the Node B is set up or reestablished, the Node B can request the ICR information of relevant surrounding Node Bs or cells actively from such Node Bs or cells before initiation of the service (namely, before readiness of service access or before readiness of allocating radio resources).

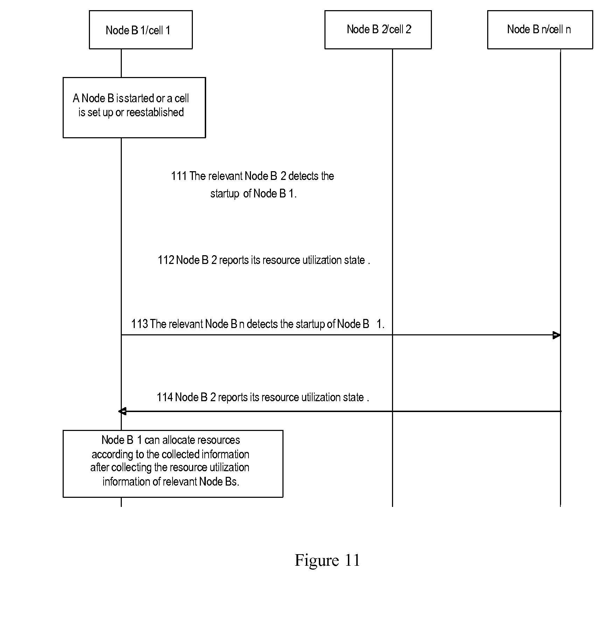

As shown in Figure 11, a specific collection process includes the following steps:
Step (111): The relevant Node B 2 detects the startup of Node B 1.
Step (112): Node B 2 reports its resource utilization state actively.
Step (113): The relevant Node B n detects the startup of Node B 1.
Step (114): Node B n reports its resource utilization state actively.

Namely, after a Node B is started or a cell governed by the Node B is set up or reestablished, the relevant Node B/cell can report its ICR information actively to the Node B which is started before initiation of the service (namely, before readiness of service access or before readiness of allocating radio resources).

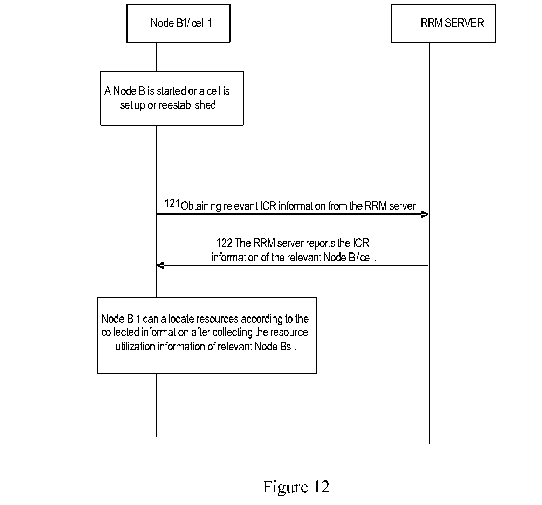

As shown in Figure 12, a specific collection process includes the following steps:
Step (121): Obtaining the relevant ICR information from an RRM server.
Step (122): The RRM server reports the ICR information of the relevant Node B/cell.

Namely, after a Node B is started or a cell is set up or reestablished, the Node B/cell obtains the relevant ICR information from an RRM server, and the RRM server reports the ICR information of the relevant Node B/cell.

In the LTE system, because an X2 interface exists between Node Bs, the information may be transferred on the X2 interface. Meanwhile, an X3 interface exists between a Node B and an RRM server. Therefore, the information can be transferred on the X3 interface.

After a Node B is started or a cell is reestablished, the Node B obtains the ICR information of the ICR control node related to the Node B/cell from the history record of the Node B.

After the started Node B obtains the ICR information of the relevant surrounding Node B/cell, especially, the state of the subcarrier, the Node B can use such information to decide the resource allocation of the cell, for example, which resources can be allocated for use at the cell center in a specific time segment, which resources can be allocated for use at the cell edge in a specific time segment, namely, the resources are ready for performing ICR, including the ICIC function. A Node B can analyze and summarize the ICR information obtained from other relevant Node B/cell, and use it as a starting point of the resource allocation.

The ICR information also includes the RRM algorithm rules of each Node B, for example, handover threshold parameter, or handover algorithm parameter. Such configuration parameters can also be transferred to the relevant Node B or ICR control node through a Node B. Depending on the specific purpose of the ICR, such ICR information can be categorized into interference management information, load balance management information and inter-cell handover information, and is not necessarily transferred altogether or concurrently. Neither the number of times of transferring nor the mode of transferring affects the present invention.

In an evolving mobile network, an embodiment of the present invention enables mutual communication between the ICR initiator, the ICR reporter, the ICR collector and the ICR controller. In the case that at least one ICR collector exists, the ICR information is reported to multiple ICR collectors concurrently, thus accomplishing measurement and reporting of ICR information in an evolving mobile network.

After obtaining the information about the relevant/adjacent Node B/cell, a Node B/cell knows how to use the resources. Especially when allocating subcarriers, the present invention prevents a Node B/cell from using the subcarrier, which is already used by another cell at the cell edge, at its own cell edge. This ensures difference of subcarriers used by adjacent cells at the cell edge, and avoids interference.

A Node B/cell obtains the handover algorithm parameters of other Node B/cell through the ICR information collection method, thus solving the coordination between Node Bs/cells of different manufacturers with different handover parameter settings.

Given above are preferred embodiments of the present invention. They are not intended to limit the scope of the present invention to these embodiments. Variations and replacements conceivable to those skilled in the art in light of this disclosure should fall into the scope of the present invention, regardless of the name of the ICR information measurement and reporting processes in an evolving mobile network in the future, other measurement information added in such processes, and combination with other measurement control processes.

## Claims

1. A method for collecting Inter-Cell Radio Resource Management (ICR) information, comprising:
obtaining the ICR information of an ICR control node correlated to a base station or a cell, after the base station is started or the cell is set up or reestablished.

2. The method of claim 1, wherein the process of obtaining the ICR information comprises:
reporting, by the ICR control node, the ICR information to the base station actively in response to detecting the base station is started or the cell is set up or reestablished; or
requesting, by the base station, the ICR information from the ICR control node, and reporting, by ICR control node, the ICR information to the base station.

3. The method of claim 1, wherein the base station obtains the ICR information of the ICR control node related to the base station or cell from a history record of the base station, after the base station is started or the cell is reestablished.

4. The method of claim 1 or claim 2, wherein the ICR control nodes comprise a base station or a radio resource management (RRM) server.

5. The method of claim 1 or claim 2, wherein the ICR information comprises cell load information, cell interference information, frequency information, carrier information, handover threshold parameters, or handover algorithm parameters.

6. A first apparatus for collecting ICR information of an evolving mobile network, comprising: an ICR information requesting module, configured to request the ICR information of a relevant apparatus from the relevant apparatus after the first apparatus is started, set up or reestablished, and before service is initiated.

7. A second apparatus for collecting ICR information of an evolving mobile network, comprising: an ICR information reporting module, configured to report the ICR information of the second apparatus after receiving an ICR information request.

8. A third apparatus for collecting ICR information of an evolving mobile network, comprising:
a detecting module, configured to detect a state of a relevant surrounding apparatus; and
an ICR information reporting module, configured to report the ICR information of the third apparatus to the relevant surrounding apparatus after the detecting module detects the relevant surrounding apparatus is started, setup or reestablished.

9. A method for sending ICR information measurement reports in an evolving mobile network in the case that at least one ICR collector exists, comprising:
sending, by an ICR initiator, an ICR information measurement initiation request message to an ICR reporter; and
triggering the ICR reporter to send an ICR information measurement report message to an ICR collector after receiving the ICR information measurement initiation request message.

10. The method of claim 9, comprising:
performing, by the ICR reporter, measurement according to the parameters in the ICR information measurement initiation request message, or providing, by the ICR reporter, the ICR information directly after receiving the ICR information measurement initiation request message; and
returning, by the ICR reporter, an ICR information measurement response message to the ICR initiator.

11. The method of claim 9, wherein the ICR information measurement initiation request message comprises: a report characteristics message unit and an ICR information message unit.

12. The method of claim 11, wherein: if the report characteristics message unit is set to "on demand", the ICR reporter reports the measurement information promptly and initiates an ICR information measurement reporting process.

13. The method of claim 11, wherein: if the report characteristics message unit is set to "periodic", the ICR reporter reports the measurement information according to the set period and frequency, and initiates an ICR information measurement reporting process.

14. The method of claim 11, wherein:
if the report characteristics message unit is set to "event", the ICR reporter judges whether the event occurs; and
if the event occurs, the ICR report initiates an ICR information measurement reporting process.

15. The method of claim 14, wherein:
if the event is up threshold mode, the ICR reporter judges whether the parameter to be measured exceeds the threshold; and decides whether to initiate an ICR information measurement reporting process after a certain delay;
if the event is low threshold mode, the ICR reporter judges whether the parameter to be measured is lower than the threshold; and decides whether to initiate an ICR information measurement reporting process after a certain delay;
if the event is increase amount threshold mode, the ICR reporter judges whether the parameter to be measured increases by an amount greater than the threshold in a certain time segment; if so, the ICR reporter decides whether to initiate an ICR information measurement reporting process after a certain delay; or
if the event is decrease amount threshold mode, the ICR reporter judges whether the parameter to be measured decreases by an amount greater than the threshold in a certain time segment; if so, the ICR reporter decides whether to initiate an ICR information measurement reporting process after a certain delay.

16. The method of claim 9, comprising:
sending, by the ICR initiator, an ICR information measurement termination request message to the ICR reporter; and
stopping, by the ICR reporter, measuring and reporting ICR information after receiving the ICR information measurement termination request message.

17. The method of claim 9, comprising: sending, by the ICR reporter, an ICR information measurement failure message to the ICR initiator to inform the ICR initiator that the ICR reporter stop measuring and reporting ICR information.

18. The method of claim 9, wherein the process, in which the ICR reporter sends the ICR information measurement report message to the ICR collector, is triggered by setting an event on an operation and maintenance center (OMC) or by setting the ICR reporter to report the ICR information actively at regular intervals.

19. The method of claim 18, wherein: the setting of an event on the OMC or the setting of an ICR reporter to report ICR information actively at regular intervals for the purpose triggering the procedure is performed in the data operation & maintenance or data configuration of the OMC.

20. The method of claim 18, wherein the event-based triggering comprises: setting an ICR information threshold; reporting, by the ICR reporter, the crossing of threshold to the corresponding ICR collector actively once detecting that the threshold is crossed.
